Europäisches Patentamt

European Patent Office

Office européen des brevets

(11) Publication number: **0 131 774**
**B1**

# (12) EUROPEAN PATENT SPECIFICATION

(45) Date of publication of patent specification: **10.05.89**

(51) Int. Cl.⁴: **C 04 B 35/48, C 01 G 25/02**

(21) Application number: **84106968.5**

(22) Date of filing: **18.06.84**

(54) Process for the preparation of partially stabilized zirconia bodies.

(30) Priority: **20.06.83 US 506239**

(43) Date of publication of application:
**23.01.85 Bulletin 85/04**

(45) Publication of the grant of the patent:
**10.05.89 Bulletin 89/19**

(84) Designated Contracting States:
**DE FR GB SE**

(56) References cited:
**EP-A-0 036 786**
**EP-A-0 067 327**
**CH-A- 234 320**
**FR-A- 762 066**
**GB-A-1 595 196**
**US-A-2 535 526**
**US-A-3 076 716**
**US-A-3 620 781**
**US-A-3 929 498**
**US-A-4 279 655**
**US-A-4 294 795**
**US-A-4 316 964**

The file contains technical information
submitted after the application was filed and
not included in this specification

(73) Proprietor: **NORTON COMPANY**
**1 New Bond Street**
**Worcester Massachusetts 01606 (US)**

(72) Inventor: **Knapp, Christopher E.**
**4 Balmoral Avenue**
**Grimsby Ontario L3M 1G3 (CA)**

(74) Representative: **Baillie, Iain Cameron**
**c/o Ladas & Parry Isartorplatz 5**
**D-8000 München 2 (DE)**

(56) References cited:
**Dynamit Nobel Chemicals information leaflet**
**"Dynazirkon C", (July 1982)**

Courier Press, Leamington Spa, England.

# Description

This invention relates to sintered zirconia bodies and a powder source for producing such bodies.

The stabilization of zirconia in the cubic phase at room temperature has been known for many years. More recently several articles and patents have appeared, describing a stabilized sintered product (PSZ) which contains both the cubic phase and the monoclinic phase or a metastable tetragonal phase, at room temperature. Also described in the literature are polycrystalline tetragonal zirconia bodies (TZP). The strongest reported material of this type has been described in U.S. Patent 4,067,745. That patent discloses a sintered body of relatively coarse cubic crystals containing a precipitate of metastable very fine tetragonal crystals.

U.S. Patents 4,344,904 and 4,360,598 also disclose sintered partially stabilized zirconia sintered products.

The invention resides in the discovery that by use of stabilized zirconia powders made from zirconia which has been co-fused with a stabilizing oxide rapidly quenched and reduced to a powder, zirconia bodies may be produced having strength up to 3 times that of otherwise similar sintered zirconia bodies.

The most obvious structural characteristic is the size of the cubic zirconia particles in the product. The zirconia particles in the products of this invention are 5 to 10 micrometers but contain secondary grain boundaries within the particles bringing the effective particle size to a submicrometer value.

In accordance with the present invention there is provided a method for forming a stabilized sintered zirconia body comprising fusing a mixture of zirconia and a stabilizing agent so as to produce a co-fused mixture thereof, cooling the co-fused mixture, grinding the material to form a powder, forming the powder into a body and firing the body, characterized by the fact that the cooling is carried out by rapid quenching and that the grinding is carried out so that at least 90 percent of the particles are finer than 1.9 micrometers (as measured by a Coulter counter).

By virtue of the method of the invention there can be produced a stabilized zirconia body having tetragonal stabilized zirconia particles of 10 micrometer or less and a bending strength of greater than 1,280,000 KPa (200,000 psi).

The zirconia powder used in the present invention is made by producing a fusion of a mixture of zirconia and a stabilizing agent. The amount of stabilizing agent may be varied depending upon the result desired. The amount of stabilizing agent is governed by the region of the equilibrium phase diagram which has the desired phase field. Thus on sintering the composition to the 1350°C.—1550°C. range it should be fully in the tetragonal or in the tetragonal and cubic phase region to realize the tetragonal or the tetragonal and cubic phases in the product. Upon normal cooling to room temperature the tetragonal phase is retained in a metastable condition. In the case of $Y_2O_3$ or stabilizing agents this is 1 to 10%; in the case of CaO it is 3.3 to 4.7%; and in the case of MgO it is 2.8 to 4% (all %'s by weight). Mixtures of 2 or more stabilizing agents may be used. Because of non-equilibrium effects such as particle size and rate of temperature change and perhaps others, the published equilibrium data is only a guide. We have found that 2.6% of $Y_2O_3$ is a minimum.

The fused mixture is very rapidly solidified by quenching. A convenient quenching method is air quenching as disclosed in U.S. patent 3,831,857, in which the molten refractory is blown through a nozzle with pressurized air, to form hollow or solid spherical particles of solidified melt. Alternatively the melt may be solidified in thin layers on or between metal plates or spheres.

This rapid quenching operation is essential to retain the high temperature phases at room temperature and limit crystallite size.

The solidified melt, which ideally consists of tetragonal and cubic crystals with or without some smaller amount of monoclinic zirconia, is reduced, by conventional non-contaminating milling methods (such as vibratory wet milling), to powder form in which at least 90 percent of the particles are finer than 1.9 micrometers (as measured by a Coulter counter), and dried. Although such mechanical action can cause conversion of the tetragonal zirconia, subsequent heating during sintering causes reversion to tetragonal and retention upon cooling due to the effect of crystal size and secondary grain boundaries.

The thus produced dry powder is then milled to break up coarse agglomerates, cold pressed, extruded, or otherwise shaped to form suitably shaped green bodies, fired to 1350 to 1550°C., and cooled to room temperature. One hour at temperature is sufficient to produce bodies of maximum strength, and no special cooling or annealing schedule is required. The sintering temperature is determined by the temperature needed to achieve greater than 98% theoretical density and desired crystal structure.

Example

A co-fusion of zirconia and yttria was made such that the air quenched product has an yttria content of 2.9 mole % (5.2 wt.%). The product was mechanically crushed to finer than about 100 micrometers and then ground in a vibratory (Sweco) mill in water for 28 hours to give a particle size distribution in which 90% of the particles were finer than 1.9 micrometers (as measured by a Coulter counter). The powder was dried in air at about 100°C., milled dry to break up clumps, and screened through a 325 mesh (having openings of about 49 micrometers). Discs, 2.54 cm in diameter and about 0.2 cm in thickness, were made from the dry powder by uniaxially pressing at 20 700 kPa (3000 psi). The discs were then fired, at atmospheric pressure in air to 1450°C. for 3—1/2 hours and then held at 1450°C. for from 1 to 3—1/2 hours, and then allowed to cool. Results showed that maximum strength was developed within one hour.

If the silica in the fused material is considered too high, it may be reduced by leaching the powder in aqueous alkaline solution and then washing the powder. Acid leaching may also be employed.

In the above example, the highest strength achieved, in a three point bending test (using bar supports was 2000 MPa (290,000 psi) for yttria stabilized zirconia made from a powder containing 0.18% silica and 6% yttria. Examination of weaker discs showed mechanical imperfections due to inhomogeneous packing in the pressing operation.

Examination of the pellets showed the main crystalline phases to be tetragonal particles averaging 10 micrometers or less in diameter, the particles contained secondary grain boundaries dividing them into several smaller particles.

Surface grinding of partially stabilized zirconia has been reported to improve the strength of the material by conversion of the tetragonal crystals to monoclinic. Such conversion places the ground surface in compression. This effect was confirmed in the discs of this invention, with the highest strengths being achieved on discs in which the surface tensional in the bending test was the ground surface.

Similar, high strength bodies were made from lime stabilized zirconia. MgO may also be employed as well as other rare earth oxides.

The zirconia products of the present invention have utility as machine parts, extrusion dies, and other uses where high strength, refractory parts of high fracture toughness and resistance to thermal shock are required.

Powders and bodies of zirconia made by the present invention may be used to make wear resistant strong parts for mechanical and thermal resistance and may be used to make tubes for oxygen sensing or other devices utilizing the oxygen ion conductivity of the zirconia.

Dynamit Nobel Chemical leaflet "Dynazirkon C" discloses a method for fusing a mixture of zirconia and a stabilizing agent so as to produce a cofused mixture, which is subsequently ground, formed into a body and fired. EP—A 36786 and EP—A 67327 teach the production of powders of a fine particle size, such as a maximum of two micrometer, for subsequent production of a ceramic body. However, the former reference deals with mixtures of a stabilizing agent and zirconium oxide particles and the latter reference deals with such particles which have been coprecipitated rather than formed by fusing and followed by grinding to this particle size.

## Claims

1. A method for forming a stabilized sintered zirconia body comprising fusing a mixture of zirconia and a stabilizing agent so as to produce a co-fused mixture thereof, cooling the co-fused mixture, grinding the material to form a powder, forming the powder into a body and firing the body, characterized by the fact that the cooling is carried out by rapid quenching and that the grinding is carried out so that at least 90 percent of the particles are finer than 1.9 micrometers (as measured by a Coulter counter).

2. A method according to claim 1, in which the stabilizing agent is calcia, yttria, magnesia, a stabilizing rare earth oxide or a mixture thereof.

3. A method according to claim 1, in which the stabilizing agent is yttria.

4. A method according to any one of the preceding claims, which includes chemically leaching the powder to reduce the silica content which has been introduced with raw materials in the fusion prior to forming the powder into the body.

5. A method according to any one of the preceding claims, in which the quenching is air quenching.

6. A method according to any one of the preceding claims, characterized by the fact that said shaped body is fired at 1350°C. to 1550°C. for a time sufficient to develop a strong sintered bond between the grains of the body.

## Patentansprüche

1. Verfahren zur Herstellen eines Körpers aus stabilisiertem Zirkoniumdioxid, in dem ein Gemisch aus Zirkoniumdioxid und einem Stabilisiermittel, das zu einer Mischschmelze aufgeschmolzen wird, die Mischschmelze abgekühlt wird, das Material zu einem Pulver aufgemahlen, aus dem Pulver ein Körper geformt und der Körper gebrannt wird, dadurch gekennzeichnet, daß das Abkühlen durch schnelles Abschrecken erfolgt und daß das Mahlen derart durchgeführt wird, daß (bei Messung mit einem Coulterzähler) mindestens 90% der Teilchen kleiner sind als 1,9 µm.

2. Verfahren nach Anspruch 1, dadurch gekennzeichnet, daß das Stabilisiermittel Calciumoxid, Yttriumoxid, Magnesiumoxid, ein stabilisierend wirkendes Seltenerdoxid oder ein Gemisch derselben ist.

3. Verfahren nach Anspruch 1, dadurch gekennzeichnet, daß das Stabilisiermittel Yttriumoxid ist.

4. Verfahren nach einem der vorhergehenden Ansprüche, in dem vor dem Formen des Pulvers zu dem Körper durch chemisches Laugen des Pulvers der beim Schmelzen mit Rohmaterialien eingeführte Siliciumgehalt vermindert wird.

5. Verfahren nach einem der vorhergehenden Ansprüche, dadurch gekennzeichnet, daß das Abschrecken mit Luft erfolgt.

6. Verfahren nach einem der vorhergehenden Ansprüche, dadurch gekennzeichnet, daß der Körper bei 1350 bis 1550°C so lange gebrannt wird, daß zwischen den Körnern des Körpers eine feste Sinterbindung entwickelt wird.

**Revendications**

1. Procédé pour former un corps stabilisé fritté en zircone, qui consiste à co-fondre un mélange de zircone et d'un agent stabilisant pour produire ainsi un mélange co-fondu, à refroidir le mélange co-fondu, à broyer la matière pour former une poudre, à façonner la poudre en un corps et à faire cuire le corps, caractérisé en ce qu'on effectue le refroidissement par une trempe rapide et que l'on effectue le broyage de manière qu'au moins 90% des particules soient plus fines que 1,9 µm (qu'on mesure à l'aide d'un compteur Coulter).

2. Procédé selon la revendication 1, dans lequel l'agent stabilisant est l'oxyde de calcium, l'oxyde d'yttrium, la magnésie, un oxyde de terre rare stabilisant ou un mélange de ceux-ci.

3. Procédé selon la revendication 1, dans lequel l'agent stabilisant est l'oxyde d'yttrium.

4. Procédé selon l'une quelconque des revendications précédentes, qui consiste également à lixivier chimiquement la poudre pour réduire la teneur en silice qui a été introduite avec les matières dans la fusion avant de façonner la poudre en un corps.

5. Procédé selon l'une quelconque des revendications précédentes, dans lequel la trempe est une trempe à l'air.

6. Procédé selon l'une quelconque des revendications précédentes, caractérisé en ce que l'on cuit ledit corps façonné à 1350°C jusqu'à 1550°C pendant une durée suffisante pour développer une forte liaison frittée entre les grains du corps.